# EUROPEAN PATENT APPLICATION

(11) **EP 1 360 907 A1**
(43) Date of publication of application: **12.11.2003**
(21) Application number: 02700879.6
(22) Date of filing: 11.02.2002
(51) Int. Cl.: A23N 5/03, A23L 3/28

(54) **IMPROVED METHOD FOR PRESERVING ENTIRE COCONUT PULP CONTAINING WATER**

(30) Priority: 14.02.2001 MX 0101653
(71) Applicant: De La Mora y de La Mora, Alejandro Eduardo, Colima 28000 (MX)
(72) Inventor: De La Mora y de La Mora, Alejandro Eduardo, Colima 28000 (MX)
(74) Representative: Aragones Forner, Rafael Angel
(86) International application number: MX0200007
(87) International publication number: WO02063981

(57) **Abstract**

The invention relates to an improvement to the method in Mexican patent No. 186456 for obtaining all the pulp from a coconut, containing water, which is subsequently vacuum packed in the form of a snowball. The pulp can be eaten immediately as a natural fresh fruit or it can be stored under suitable storage conditions for up to one year without losing the original flavour and freshness thereof. Said improvement consists in placing frozen balls of pulp in baskets so that, by means of a carrousel, they can be simultaneously passed through a dip washing system, a sprinkler cleaning system and a disinfecting system using an ultraviolet radiation germicidal unit which eliminates all types of impurities, germs and micro organisms from the product before it is vacuum packed , without altering the flavour or the freshness of the natural fruit, thereby increasing the self life of said product.

## Description

This invention particularly relates to the food field and fruit preservation, and generally it is an improvement to Mexican Patent N°. 186456, where improvement consist of incorporating in a prior process portion, a simultaneous washing and sanitizing system of coconut meat with its water inside, through which all kind of product impurities, germs, or microorganisms are removed before packing without modifying the original flavor and freshness from fruit, and attaining more useful life time in storage thereof.

### INVENTION BACKGROUND

As previously pointed out in Mexican Patent N° 186456 as of August 29, 1994, of my property, in tropical areas where there are plenty coconut palms, natives take down coconuts to later open with machete a hole in the upper part of it and drink its delicious liquid thereby. Some other times, after drinking the water, they use to break the coconut to pull out and eat its prized meat, or to later on process it and use it for other activities. Also, the coconut is usually exposed to sun so once it is dried, it can be utilized in manufacturing oils, soaps, or other industrial uses, or just to use the dried fiber as stuffing for furniture seats.

Sometimes, natives pull off the fiber that covers the coconut to sell it already peeled, and only in special occasions they break the hard shell exposing the whole meat covered with a thin film with water inside, for its sale. This is not a common method since frequently, when trying to pull off the hard shell, the meat rips and the water drains, and once peeled, the meat slowly begins to mature and in a few days it becomes rancid and dry, even if it is kept on ice. Additionally, the product exposed in this way is not attractive to consumers because little by little dirt, dust, or the dirty hands of seller contaminates it. This is why it is not frequent to find in the market the coconut meat as a whole and intact ball, being better for natives to sell coconuts in one piece avoiding all the aforementioned issues.

Having in mind the aforementioned, my Mexican Patent N°. 186456 describes a procedure to attain a food product having a white ball shape formed by a whole coconut meat with its original water inside, that in certain conditions may be marketed up to 180 days and which has an attractive and prized presentation, specially when it is eaten, because it does not lose its original flavor and is confidently hygienic.

However, even though the original purpose was accomplished, the main difficulty on mi prior patent is the product's precarious useful life attained of just 180 days. So this application details an improved procedure to extend the useful life of the white coconut meat with its water inside using a sanitizing step completely different to the prior one which has more praised results without affecting fruit's properties and specially its original flavor and freshness. Consequently, utilizing my new improved process of the present invention an innovative step in the art is made reducing in that way the operative costs when it is compared to the prior process also of my invention, and specially when diminishing the fruit's manual handling from operators.

I have briefly pointed out the prior art experiences in order to determine the scope of the present invention, which as set forth at beginning of this description, refers to an improved procedure for manufacturing and preserving a ball-type shape white coconut meat with its water inside, totally innovative, economical and consequently able of patent.

### INVENTION OBJECTS

In virtue that the present invention is a procedure of improvements, it is natural that the patent application below detailed, shows a series of manufacturing stages that were utilized in my prior patent number 186456, whereby it is allowed to perform a product that does not present all those difficulties to the situations aforementioned, and which steps are basic, nevertheless they introduce a simultaneous and ingenious washing and sanitizing system and the appropriate combination of known materials and stages, resulting in a completely novel product, and of greater useful commercial life.

Consequently, the main object of the present invention, is that of increase the useful commercial life of a whole white coconut meat with ball shape, having its original water inside, which may be eaten immediately or even up to one year after, maintaining the virtue of preserving its original freshness and flavor.

Other object of this invention, is to provide a more economical process that finally originates a cheaper natural food product, free of all kind of germs and contamination, using a sanitizing stage through ultraviolet radiations, which supersedes the chemical sanitizing step utilized in my prior patent number 186456, avoiding in this way the use and, consequently further distribution of some chemical conservant or antioxidant, and so greatly reducing operative expenses.

Yet another of the advantages of this invention, is to provide a high-vacuum packed food product, which can be stored for longer time in retail stores, or being export in special conditions, and acquired for its immediate consumption, or put on the table with a quality in freshness and flavor completely natural, without chemical flavorings or dyes.

### DETAILED DESCRIPTION OF THE INVENTION

In a preferred embodiment, not restrictive whatsoever, the improved procedure for preservation of a white coconut meat ball with its water inside, of my invention, comprising a series of steps similar to those detailed in my Mexican Patent number 186456, and wherein only the washing and sanitizing steps change, is intended to the sole purpose of providing more useful life to the finished product.

Whereas the proceedings start with selection of the recently cut coconut or previously stored one, which should not show fruit grown on its surface, and should have an ideal ripeness level, characterized by a withered olive-green color.

The coconut so selected is pulled off from the fiber covering it with machete, an electric saw, or other media, until the pit or hard shell covering the meat appears.

Once the pit of whole coconut is deprived of its fiber, it is removed away, procedure that can be attain by several ways. In the first case one can use the machete, but with this method there's a risk that due to a unfortunate stroke with the machete, the coconut pit would smash and one of its fragments would break the meat thereby draining the water.

Other way to remove the pit off the coconut, is applying water steam, so due to increased temperature, the pit expands and smashes, while this method disadvantage is that steam temperature changes the flavor both of the meat and the water, stop having its original freshness.

Another way of removing the pit, and that was an innovative step in the art mentioned in my Patent 186456, is to utilize freezing, which can be done instantaneously immersing the pit in liquid nitrogen; or slowly, immersing it in iced saltwater, at a temperature not least than -6°C and for a period not greater than 24 hours.

Once the coconut pit is frozen it would proceed to diametrically cut it with a knifing disk or electric saw along its circumference, so it can be splitted up in two portions and easily removed without wounding the meat, so the meat comes out entirely in one piece.

Then using a card or a blade the whole pitted coconut meat with its water inside, is peeled from the thin brown film covering it. When using the blade, a complete shaving is performed, and when using the electrical card, the coconut is little by little rotated, until it is completely white.

Later, a recheck is done of all the white meat balls, and if some of them become soften during the previous step, they got frozen again until they presents firmness before proceeding to the washing and sanitizing steps, that are intended to cleanse and eliminate all kind of impurities and germs that could be adhered to the product during its handling.

Until this point, the prior steps are the same as those in my Patent Number 186456, but the innovative step and improvement of this application comprises the way how the white coconut meat washing and sanitizing operations are performed, before packing, which now can be done simultaneously, and therefore making the process faster, cost-effective, and of course much more efficient.

On my prior patent, the white frozen coconut meat was cleansed by immersion, in a tank containing a solution 7 ppm of sodium hypochlorite or hypochlorite calcium, for a period of approximately 5 minutes, and the white frozen coconut meat sanitizing was separately performed either using water steam at 180°C and at a pressure of 1.63 kg/cm2 during a lapse of 15 seconds, or using overheated steam at 200°C with a pressure of approximately 1.76 kg/cm2 for 5 seconds.

Even though the previous operations were effective from a practical view, from a commercial view they were unsuitable, since using water steam, or overheated steam - even for a few seconds - would result in a risky operation due to operators could expose the meat longer time therewith getting that meat would lose part of its natural flavor, and only having a lesser useful average life of the one specified.

Consequently, a less risky operation was required, free of operator inconstancy, besides the washing and sanitizing operation would provide greater time of useful life that would be more cost-effective, and as far as possible wouldn't be done by the dirty hands of operators.

The innovative step of this application, is that the meat washing and sanitizing is carried out simultaneously, and consists of putting the white frozen meats in a set of small plastic baskets, or preferably stainless steel small baskets, hanging and moving forward into a structure having a rail or circular system, which may slowly operate at will or continuously. Once the frozen meats are put in the small baskets, the circular system starts moving, mechanically and automatically lowering them down to a rectangular-shaped tank where they are immersed into a washing and sanitizing solution, moving lengthwise during some time, and wherein the solution contains 7 ppm sodium hypochlorite or calcium hypochlorite, and then the small baskets are lifted out the solution bath level, making them rotate slowly so the meats in their interior, are for awhile in contact with the same washing solution, but now this solution is being applied through spouts using jet sprayers, and finally when the small baskets are out of the tank they are directed to the packing area, where the fruit is high-vacuum packed.

Another innovative step of mi previous patent number 186456, is arranging in one of the inner tank walls, a fixed germicidal unit, which consists of a frame that is able to support a series of lamps with ultraviolet radiations, which connections and numbers are in direct relation to said tank capacity. Likewise, the entire unit is protected through an insulating sheet of ultraviolet lights, so when the tank is open it wouldn't cause any harmful radiations to operators. The housing is made of quartz or Teflon, and the germicidal unit is also provided with a remote control system of monitors for distinguishing when any of the lamps is blown o has low radiation, or for disconnecting the same when tank is washed. The germicidal unit sends its radiations directly over the entire surface of the cleansing solution liquid, eliminating in this way all existing germs or microorganisms, and even though it is always in contact to the fluid, its electrical connections are hermetically protected by an insulating material resistant to attacks by the fluid.

The cleansing solution entering the jet sprayer area is fed by a centrifugal pump which pumps the solution from the immersion area to the spraying area through a head that supports the tubes and its nozzles to effectuate the pressure-spraying over the entire surface of the meat, so any impurity that could be deposited on the coconut meat surface during the immersion time is eliminated, and the small baskets rotation would be done in order to drive out any dirt which may stay in the small basket interior, or on meats, and it may fall to the tank bottom.

The washing and sanitizing tank, is a big rectangular-shaped tank, originally open on its upper side, which is later closed when the small basket system enters the solution through a plurality of lids with its respective handles. Said tank as aforementioned contains in its interior: a small basket immersion area, a spraying area thereof, an ultraviolet radiation area, and in its slower side it is provided with a series of strainers for garbage with their respective drainage units, to eject impurities or the cleansing solution when it becomes dirty. Additionally, said tank is provided with an electrical and mechanical system of controls which are intended to regulate the operation thereof, and stop it in case that for any circumstances the small baskets become clogged.

Finally, the white coconut meat balls, already washed and sanitized are taken to its packing, being located inside a flexible and clear plastic material bag, nonporous, which may be of polyvinyl chloride, polystyrene, or any other similar material. With the product inside its bag, the following step is packing it at high vacuum, wherein the packer seals the bag, once the product has been subject to severe environments.

Preservation of the product when it has been duly packed, is a substantial requirement, because it should be in a warehouse with temperature not lesser than minus 6°C, and in this conditions the coconut meat will have a useful life of almost one year, but once the product is sold, if it is not immediately eaten, it may be kept inside the freezer at a temperature between 0 to 2°C, having in this way a useful life of 90 days.

If the aforementioned physical-chemical conditions of operation were kept, the product will show the following features:
Coconut water pH ranges between 5.30 and 5.35.
Coconut meat pH ranges between 5.40 and 5.45 with an alkalinity of 64.4 ppm to methyl orange and a reactive factor of 1.154 Brix.

34% moisture, with a dried base humidity of 22.3.

Maximum allowed hypochlorite should not exceed 0.2% water volume for total wash.

It is important to make note that the distinctive steps, and generally the physical-chemical conditions for manufacturing the white coconut meat with a shape of ball, with its water inside in this invention may vary, and the previously described has been considered just as an exemplary embodiment not restrictive, and that changes may be performed therein or in any of its applications, keeping it within the spirit and scope of the invention, such as are addresses in the following claims.

## Claims

1. An improved process to preserve whole coconut meat with its water inside, shaped as a white ball comprising: Selecting only full-grown coconuts not rotten; Removing the fiber up to the pit; Removing the pit from the coconut pulling off the hard shell surrounding the meat, preventing breakage thereof and water drainage; Peeling off the meat until it is white; Then washing, sanitizing, packing, and storing the product; **characterized in that** the coconut pit removal is effectuated by slow or quick freezing, to later diametrically cut it with a saw so then it may be divided into fractions and removing the coconut without damaging the meat or pulp; and the washing and sanitizing is simultaneously done; whereby the frozen meat is introduced into small baskets hanging in a structure having a rail or movable round carrousel, but previously the meat is contained in the baskets immersed in a tank containing a 7 ppm solution of sodium hypochlorite or calcium hypochlorite, or any other conventional cleasing solution, nad then they are lifted out of the bath level, after which they are rotated so that they enter in contact with jet sprayers fed with the same cleasing solution, then they continue their trip to the packing area; and **in that** said tank is provided through any of its inner walls, an ultraviolet radiation germicidal unit, with a remote control system of monitors, which secures in this way that the cleansing solution is always radiated thereby, suppressing any possible germs or microorganisms, and therefore increasing useful life of the meat.

2. An improved process to preserve whole coconut meat with its water inside, according to Claim 1, wherein the entire germicidal unit is protected against ultraviolet light by an insulating sheet, and the housing thereof is made of quartz or Teflon, and its electrical connections are hermetically protected by an insulating material resistant to attacks by the cleansing solution.

3. An improved process to preserve whole coconut meat with its water inside, according to any of the prior claims, wherein the cleansing solution is fed by a centrifugal pump that pumps the solution from the immersion area to the spray area through a head that supports the tubes and its nozzles to effectuate the pressure-spraying over the entire surface of the meat.

4. An improved process to preserve whole coconut meat with its water inside, according to any of the prior claims, wherein the tank originally open, is later closed when the carrousel with the small baskets enters the cleansing solution of ultraviolet radiation, and by its lower side is provided with a series of strainers with their respective drainage units, as well as a system of controls to regulate the operation thereof.

5. An improved process to preserve whole coconut meat with its water inside, according to any of the prior claims, wherein the packing is effected through high vacuum using clear plastic bags made of polyvinyl chloride, polyamide, polystyrene, or any other similar material, and for storage, temperatures minus 6 degrees are used.

6. An improved process to preserve whole coconut meat with its water inside, according to any of the prior claims, wherein for quick freezing it is used a liquid nitrogen spray, and for slow freezing, iced saltwater is used at a temperature lesser than -6°C for a period not greater than 24 hours.

7. An improved process to preserve whole coconut meat with its water inside, according to any of the prior claims, wherein peeling of coconut is effected with blades until it is completely shaved, or by electrical card, until the coconut is completely white, and the conventional cleansing solution used should not affect the color or flavor of the coconut meat.
